# FASCICULE DE BREVET EUROPEEN

(11) **EP 2 504 982 B1**
(45) Date de publication et mention de la délivrance du brevet: **13.04.2016**
(21) Numéro de dépôt: 10805447.9
(22) Date de dépôt: 22.11.2010
(51) Int. Cl.: H04L 29/14, H04L 29/06, H04W 8/12

(54) **PROCEDE DE BASCULEMENT D'UN HSS PRIMAIRE SUR UN HSS DE SECOURS DANS UN RESEAU IP**
VERFAHREN ZUR BEWEGUNG EINES PRIMÄREN HSS ZU EINEM SICHERHEITS HSS IN EINEM IP NETZWERK
METHOD FOR MOVING A PRIMARY HSS TO A BACKUP HSS IN AN IP NETWORK

(30) Priorité: 27.11.2009 FR 0958456
(43) Date de publication de la demande: 03.10.2012
(73) Titulaire: Orange, 75015 Paris (FR)
(72) Inventeur: LE ROUZIC, Jean-Claude, F-22560 Trebeurden (FR); DOREE, José, F-22300 Lannion (FR)
(74) Mandataire: Millet, Sandrine
(86) Numéro de dépôt international: PCT/FR2010/052476
(87) Numéro de publication internationale: WO 2011/064492

(56) Documents cités:
- WO-A1-2008/046266
- WO-A1-2008/046270
- WO-A1-2009/080095
- US-A1- 2008 227 451

## Description

La présente invention concerne les réseaux IP ("*Internet Protocol*"), et notamment ceux parmi les réseaux IP qui sont aptes à mettre en oeuvre des protocoles de contrôle de session évolués. Les réseaux IP permettent la diffusion de données conversationnelles, tels que "Voix sur IP" (VoIP), "Partage de Contenu", "Présence", ou "Messagerie Instantanée".

Plus particulièrement, la présente invention concerne la cohérence des informations-clients enregistrées dans un tel réseau, et donc la cohérence dans le traitement par le réseau des données conversationnelles relatives à ces clients.

Les dispositifs clients à qui de telles ressources sont accessibles peuvent par exemple être un terminal fixe ou mobile, ou une passerelle domestique ou située dans une entreprise ("*Residential Gateway*" en anglais), ou encore une passerelle d'opérateur réseau ("*Voice Gateway*" en anglais) telle qu'un DSLAM-SIP (DSLAM sont les initiales des mots anglais "*Digital Subscriber Line Access Multiplexer*" signifiant "multiplexeur d'accès de lignes d'abonnés numériques" ; il s'agit d'un dispositif collectant le trafic de données DSL qui transite sur un certain nombre de lignes téléphoniques).

Les protocoles de contrôle de session évolués classiques, tels que le protocole SIP (initiales des mots anglais *"Session Initiation Protocol*" signifiant "Protocole d'Initiation de Session"), utilisent des messages dits "de signalisation", qui sont des messages permettant à un terminal de demander une connexion avec un autre terminal, ou également des messages signalant qu'une ligne téléphonique est occupée, ou signalant que le téléphone appelé sonne, ou encore signalant que tel téléphone est connecté au réseau et peut être joint de telle ou telle manière.

Le protocole SIP a été défini par l'IETF dans le document RFC 3261. Ce protocole permet l'établissement, la modification et la terminaison de sessions multimédia dans un réseau utilisant le protocole IP. Le protocole SIP permet également des procédures de notification d'événements et l'envoi d'informations en dehors du contexte d'une session. Il est largement utilisé pour des commandes de services de messagerie instantanée. Ainsi, dans un environnement SIP, il existe différents types de communications telles que des requêtes d'établissement de sessions et des requêtes échangées hors de tout dialogue.

L'invention convient bien en particulier aux infrastructures de type IMS ("*IP Multimedia Subsystem*"). L'IMS a été défini par les organismes de normalisation 3GPP ("*3rd Generation Partnership Projet*") et TISPAN ("*Telecommunications and Internet Converged Services and Protocols for Advanced Networking*"). C'est une architecture de réseau introduite par le 3GPP pour les réseaux mobiles, puis reprise par TISPAN pour les réseaux fixes. Cette architecture, qui utilise le protocole SIP, permet l'établissement dynamique et le contrôle de sessions multimédia entre deux clients ainsi que la réservation des ressources au niveau du réseau de transport des flux multimédias. Grâce à cette architecture, les opérateurs réseau peuvent commodément mettre en oeuvre une politique de gestion, fournir une Qualité de Service prédéterminée, et calculer les montants à facturer aux clients. L'IMS permet actuellement d'accéder à des services de type téléphonie, visiophonie, présence et messagerie instantanée, dont elle gère aussi l'interaction.

Lorsqu'un utilisateur souhaite bénéficier des services offerts par un réseau IP tel que ceux décrits ci-dessus, il émet vers le réseau des messages de signalisation pouvant inclure notamment divers types de requêtes.

Tout d'abord, le terminal de l'utilisateur doit s'enregistrer sur le réseau. Lorsque le réseau est incapable de faire le lien entre cet enregistrement et un enregistrement précédent (par exemple suite à une panne réseau, ou suite à un arrêt du terminal pendant une durée supérieure à une valeur prédéterminée), l'enregistrement est considéré comme étant un enregistrement initial. Après un enregistrement initial, le terminal de l'utilisateur doit envoyer périodiquement au réseau une requête pour confirmer qu'il souhaite maintenir son enregistrement.

Pour pouvoir donc enregistrer les clients, les réseaux IP tels que décrits ci-dessus comprennent un ou plusieurs serveurs, généralement appelés "S-CSCF" (initiales des mots anglais "*Serving-Call Server Control Function*" signifiant "Fonction de Contrôle du Serveur d'Appels de Service"), aptes (entre autres fonctions) à gérer la procédure d'enregistrement des dispositifs connectés au réseau.

En outre, ces réseaux comprennent un ou plusieurs serveurs, généralement appelés "I-CSCF" (initiales des mots anglais "*Interrogating-Call Server Control Function*" signifiant "Fonction de Contrôle du Serveur d'Appels d'Interrogation") qui, au moment de l'enregistrement d'un dispositif-client, interrogent un serveur appelé "HSS" (initiales des mots anglais "*Home Subscriber Server*" signifiant "Serveur d'Abonné Nominal") pour pouvoir sélectionner un serveur S-CSCF possédant les caractéristiques qui sont obligatoirement (et, le cas échéant, optionnellement) requises pour atteindre le niveau de service souscrit par ce client.

En effet, chaque dispositif-client peut, après qu'un serveur S-CSCF lui ait été ainsi attribué, envoyer une requête de souscription à certains services pour la connexion en cours. Il peut s'agir d'un service de notification d'événement : par exemple, lorsque l'utilisateur d'un terminal dispose d'une boîte vocale sur le réseau, ce terminal peut souscrire à une notification de dépôt de message, c'est-à-dire qu'il peut demander à être informé chaque fois qu'un message a été enregistré sur cette boîte vocale ; le terminal de l'utilisateur peut, de même, demander à être notifié de son état d'enregistrement ; il peut également souscrire à un service de notification de présence, qui lui permet de recevoir des informations publiées par un autre utilisateur qu'il a désigné, et ainsi de suite. Après la requête de souscription initiale, le terminal doit envoyer périodiquement au réseau une requête pour renouveler sa souscription.

Les serveurs S-CSCF, mentionnés ci-dessus, contribuent à la mise en oeuvre de ces divers services en gérant le routage de la signalisation, d'une part, entre chaque dispositif-client et les serveurs du réseau spécialisés dans la mise en oeuvre de tel ou tel service souscrit par le client, et d'autre part en direction d'autres clients gérés par le même réseau ou par un réseau qui lui est relié.

Pour pouvoir acheminer ces diverses requêtes au sein du réseau, les serveurs de type I-CSCF ou de type S-CSCF (d'ailleurs souvent combinés en un même serveur, dénoté I/S-CSCF) échangent des informations avec un ou plusieurs serveur(s) de type HSS mentionné ci-dessus. Les serveurs HSS contiennent chacun une base de données-clients, et sont donc l'équivalent dans les réseaux IP des serveurs "HLR" (initiales des mots anglais *"Home Location Register*" signifiant "Registre de Localisation Nominal") utilisés dans les réseaux GSM. Chaque serveur HSS contient le "profil" d'un certain nombre de clients du réseau, ce profil comprenant leur état d'enregistrement, des données d'authentification et de localisation, et les services souscrits.

Les serveurs HSS jouent donc un rôle capital dans le fonctionnement d'un tel réseau, et l'exactitude des informations dynamiques qu'ils contiennent est essentielle pour le bon fonctionnement du réseau. C'est pourquoi il est généralement prévu d'associer à chaque HSS "normal," ("primaire") un HSS "de secours" ("secondaire") destiné à remplacer le HSS primaire au cas où ce dernier tombe en panne.

Mais une telle disposition entraîne, comme s'en sont rendu compte les auteurs de la présente invention, un réel danger quant à la cohérence dans le traitement par le réseau des informations relatives aux clients.

Voici un exemple élémentaire d'incohérence causée par le basculement sur un HSS de secours dans un réseau comprenant plusieurs serveurs (ou fonctions) I-CSCF et plusieurs serveurs (ou fonctions) S-CSCF. On notera que dans un tel réseau les appels entrants à partir du Réseau Public Téléphonique Commuté (RPTC) (en anglais, "*Public Switched Telephone Network*" ou PSTN) sont habituellement distribués de manière équitable sur l'ensemble des serveurs I-CSCF ; ceux-ci interrogent alors le serveur HSS pour déterminer vers quel serveur S-CSCF il faut router chaque appel entrant.

Supposons à présent que la connexion entre un certain serveur I-CSCF (appelons-le "serveur C2", hébergeant aussi un serveur S-CSCF) et le serveur HSS primaire tombe en panne, de sorte que ce serveur C2 bascule sur le serveur HSS de secours. Le serveur HSS de secours est alors informé par le serveur C2 à chaque fois qu'un client s'enregistre subséquemment sur le réseau via le serveur C2. Si à présent un appel entrant à destination de l'un de ces clients nouvellement enregistré sur le HSS de secours est confié au serveur C2, l'appel sera traité correctement puisque le serveur C2 interrogera le HSS de secours pour déterminer quel est le S-CSCF en charge de ce client. En revanche, si un appel pour ce même client est confié à un serveur (appelons-le "serveur C1", hébergeant également un serveur S-CSCF) autre que le serveur C2, et qui n'a, quant à lui, pas perdu sa connectivité avec le serveur HSS primaire, alors l'interrogation de ce serveur HSS primaire par le serveur C1 aboutira à la conclusion erronée que le client concerné n'est pas enregistré, de sorte que l'appel sera routé vers la boîte vocale du client au lieu de lui être transmis directement.

Comme expliqué en détail ci-dessous, ce problème affectant les serveurs CSCF affecte également les serveurs dits "serveurs d'applications" ("*application servers*" ou AS en anglais), tels que les serveurs de messagerie vocale, les serveurs de présence et les serveurs de téléphonie, car ces serveurs AS doivent consulter un serveur HSS lors du dépôt ou de la récupération de données de services.

Or, dans les réseaux IP selon l'état de l'art, les incohérences mentionnées ci-dessus ne disparaissent que lors d'un redémarrage global du réseau, car les problèmes posés par le basculement sur un serveur HSS de secours ne sont pas pris en compte. Ceci est expliqué dans les documents WO2008/046266 et WO2008/046270.

La présente invention concerne donc, selon un premier aspect adapté à une première architecture de réseau, un procédé de basculement d'un serveur HSS primaire sur un serveur HSS de secours dans un réseau IP, ledit réseau comprenant une pluralité de serveurs CSCF (respectivement, serveurs d'applications), dans lequel, suite à la détection d'une perte de connexion entre l'un desdits serveurs CSCF (respectivement, serveurs d'applications) et un serveur HSS primaire auquel il est normalement connecté, ce serveur CSCF (respectivement, serveur d'applications) se connecte à un serveur HSS de secours. Ledit procédé est remarquable en ce qu'il comprend également les étapes suivantes :
a) un dispositif de diffusion prédéterminé est informé de ladite perte de connexion avec ledit serveur HSS,
b) ledit dispositif de diffusion envoie, au moins aux autres serveurs CSCF (respectivement, serveurs d'applications) normalement connectés audit HSS primaire, un message de panne prédéterminé contenant la référence dudit serveur HSS primaire, et
c) lesdits autres serveurs CSCF (respectivement, serveurs d'applications) se connectent audit serveur HSS de secours.

On notera que ledit serveur CSCF peut héberger indifféremment une fonction S-CSCF, ou une fonction I-CSCF, ou encore les deux.

Grâce à ces dispositions, tous les serveurs CSCF (respectivement, serveurs d'applications) reliés à un même serveur HSS primaire basculent sur un même serveur HSS de secours, de sorte que l'exactitude des informations enregistrées sur le serveur HSS (HSS primaire en fonctionnement normal, ou HSS de secours suite à une perte de connectivité de l'un au moins des serveurs CSCF ou serveurs d'applications) est garantie en permanence.

Selon des caractéristiques particulières, ledit dispositif de diffusion comprend ledit serveur HSS de secours.

Grâce à ces dispositions, c'est le serveur HSS de secours lui-même qui, avantageusement, alerte les serveurs CSCF (respectivement, serveurs d'applications) concernés.

Selon d'autres caractéristiques particulières, ledit dispositif de diffusion comprend un serveur SLF.

Grâce à ces dispositions, la diffusion de l'alerte est avantageusement assurée par un serveur SLF (initiales des mots anglais "*Subscriber Location Function*" signifiant "Fonction de Localisation d'Abonné"). En effet, les réseaux IP comprenant plusieurs serveurs HSS comprennent également, de manière classique, un serveur SLF.

Selon encore d'autres caractéristiques particulières, ledit dispositif de diffusion comprend ledit serveur CSCF (respectivement, serveur d'applications) ayant détecté une perte de connexion.

Grâce à ces dispositions, la diffusion de l'alerte est directement assurée par le serveur CSCF (respectivement, serveur d'applications) qui a détecté la perte de connexion.

La présente invention concerne également, selon un deuxième aspect adapté à une deuxième architecture de réseau, un procédé de basculement d'un serveur HSS primaire sur un serveur HSS de secours dans un réseau IP, ledit réseau comprenant une pluralité de serveurs CSCF (respectivement, serveurs d'applications) et une pluralité de serveurs SLF assurant une fonction de mandataire entre lesdits serveurs CSCF (respectivement, serveurs d'applications) d'une part, et lesdits serveurs HSS primaire et de secours d'autre part, dans lequel, suite à la détection d'une perte de connexion entre l'un desdits serveurs SLF et un serveur HSS primaire auquel il est normalement connecté, ce serveur SLF se connecte à un serveur HSS de secours. Ledit procédé est remarquable en ce qu'il comprend également les étapes suivantes :
a) un dispositif de diffusion prédéterminé est informé de ladite perte de connexion avec ledit serveur HSS,
b) ledit dispositif de diffusion envoie, au moins aux autres serveurs SLF normalement connectés audit HSS primaire, un message de panne prédéterminé contenant la référence dudit serveur HSS primaire, et
c) lesdits autres serveurs SLF se connectent audit serveur HSS de secours.

Grâce à ces dispositions, tous les serveurs SLF reliés à un même serveur HSS primaire basculent sur un même serveur HSS de secours, de sorte que l'exactitude des informations enregistrées sur le serveur HSS (HSS primaire en fonctionnement normal, ou HSS de secours suite à une perte de connectivité de l'un au moins des serveurs SLF) est garantie en permanence.

Selon des caractéristiques particulières, ledit dispositif de diffusion comprend ledit serveur HSS de secours.

Grâce à ces dispositions, c'est le serveur HSS de secours lui-même qui, avantageusement, alerte les SLF concernés.

Selon d'autres caractéristiques particulières, ledit dispositif de diffusion comprend ledit serveur SLF ayant détecté une perte de connexion.

Grâce à ces dispositions, la diffusion de l'alerte est directement assurée par le serveur SLF qui a détecté la perte de connexion.

Corrélativement, l'invention concerne divers dispositifs.

Elle concerne ainsi, premièrement, un dispositif de diffusion pour le basculement d'un serveur HSS primaire sur un serveur HSS de secours dans un réseau IP, ledit réseau comprenant une pluralité de serveurs CSCF (respectivement, serveurs d'applications). Ledit dispositif comprend des moyens pour, lors de la détection d'une perte de connexion entre l'un desdits serveurs CSCF (respectivement, serveurs d'applications) et un serveur HSS primaire auquel il est normalement connecté, et de la connexion de ce serveur CSCF (respectivement, serveur d'applications) à un serveur HSS de secours :
a) recevoir l'information de ladite perte de connexion avec ledit serveur HSS, et
b) envoyer, au moins aux autres serveurs CSCF (respectivement, serveurs d'applications) normalement connectés audit HSS primaire, un message de panne prédéterminé contenant la référence dudit serveur HSS primaire.

Selon des caractéristiques particulières, ledit dispositif de diffusion comprend ledit serveur HSS de secours.

Selon d'autres caractéristiques particulières, ledit dispositif de diffusion comprend un serveur SLF.

Selon encore d'autres caractéristiques particulières, ledit dispositif de diffusion comprend ledit serveur CSCF (respectivement, serveur d'applications) ayant détecté une perte de connexion.

L'invention concerne aussi, deuxièmement, un dispositif de diffusion pour le basculement d'un serveur HSS primaire sur un serveur HSS de secours dans un réseau IP, ledit réseau comprenant une pluralité de serveurs CSCF (respectivement, serveurs d'applications) et une pluralité de serveurs SLF assurant une fonction de mandataire entre lesdits serveurs CSCF (respectivement, serveurs d'applications) d'une part, et lesdits serveurs HSS primaire et de secours d'autre part. Ledit dispositif comprend des moyens pour, lors de la détection d'une perte de connexion entre l'un desdits serveurs SLF et un serveur HSS primaire auquel il est normalement connecté, et de la connexion de ce serveur SLF à un serveur HSS de secours :
a) recevoir l'information de ladite perte de connexion avec ledit serveur HSS, et
b) envoyer, au moins aux autres serveurs SLF normalement connectés audit HSS primaire, un message de panne prédéterminé contenant la référence dudit serveur HSS primaire.

Selon des caractéristiques particulières, ledit dispositif de diffusion comprend ledit serveur HSS de secours.

Selon d'autres caractéristiques particulières, ledit dispositif de diffusion comprend ledit serveur SLF ayant détecté une perte de connexion.

Les avantages offerts par ces dispositifs sont essentiellement les mêmes que ceux offerts par les procédés corrélatifs succinctement exposés ci-dessus.

On notera qu'il est possible de réaliser les dispositifs succinctement décrits ci-dessus dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes de l'un quelconque des procédés de basculement d'un HSS primaire sur un HSS de secours succinctement exposés ci-dessus, lorsqu'il est exécuté sur un ordinateur.

Les avantages offerts par ce programme d'ordinateur sont essentiellement les mêmes que ceux offerts par lesdits procédés.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1 représente schématiquement un réseau général pour la fourniture de services multimédia apte à mettre en oeuvre l'invention,
- la figure 2 représente la perte de connexion entre un serveur CSCF et le serveur HSS primaire auquel il est normalement connecté, selon une première architecture de réseau,
- la figure 3 représente un premier mode de réalisation de l'invention,
- la figure 4 représente un deuxième mode de réalisation de l'invention, et
- la figure 5 représente la perte de connexion entre un serveur CSCF et le serveur HSS primaire auquel il est normalement connecté, selon une deuxième architecture de réseau.

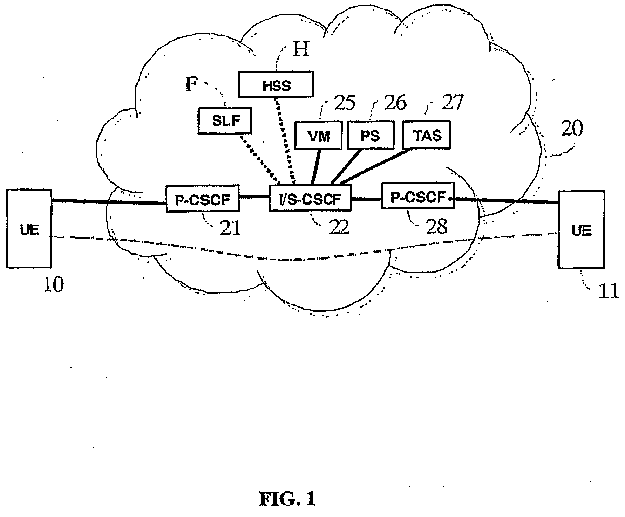

Le système illustré sur la **figure 1** est fondé sur une architecture de réseau de type IMS, tel que présenté succinctement ci-dessus. Les services multimédia offerts par un tel système peuvent comprendre des services de téléphonie, de vidéo-téléphonie, de partage de contenu ("*content-sharing*" en anglais), de présence, de messagerie instantanée, ou de télévision. Ces services sont à la disposition de l'utilisateur d'un terminal UE (pour "*User Equipment*" en anglais) 10 sur un réseau 20 comprenant une infrastructure de transport IP et des serveurs à travers lesquels le terminal 10 peut échanger des flux multimédias et des signaux de contrôle de session conformes au protocole SIP, notamment avec un autre terminal UE 11, les terminaux 10 et 11 s'étant au préalable enregistrés auprès du réseau 20.

Le terminal 10, 11 est un terminal fixe ou mobile, ou une passerelle domestique ou d'entreprise, disposant de moyens de signalisation SIP et pouvant comprendre des moyens de restitution d'un contenu audiovisuel.

Comme le montre la figure 1, ce système de fourniture de services multimédia s'appuie sur un réseau 20 conforme à l'architecture IMS définie au 3GPP, et qui comprend :
- une infrastructure de transport IP (non représentée) ;
- un ou plusieurs serveurs d'appel I/S-CSCF (pour la combinaison d'une fonction "*Interrogating-Call Server Control Function"* et d'une fonction "*Serving-Call Server Control Function*" dans le même serveur) ; un serveur d'appel I/S-CSCF, désigné par 22 sur la figure 1, gère notamment la procédure d'enregistrement des dispositifs connectés au réseau 20 ; en effet, pour qu'un tel dispositif puisse bénéficier des services fournis par ce réseau, ce dispositif doit, sauf exceptions (cas de certains appels d'urgence), s'enregistrer auprès du serveur I/S-CSCF 22 ; le serveur I/S-CSCF 22 gère également le routage de la signalisation entre le terminal 10 et les serveurs de messagerie vocale VM 25, de présence PS 26 et de téléphonie TAS 27, ainsi que le routage en direction d'autres terminaux gérés par le même réseau IMS (comme par exemple le terminal 11) et le routage de la signalisation entre ce réseau IMS 20 et d'autres réseaux (non-représentés) ;
- un (ou plusieurs) serveur(s) P-CSCF (initiales des mots anglais "*Proxy-Call Server Control Function*" signifiant "Fonction de Contrôle du Serveur d'Appels Mandataire") ; le serveur P-CSCF 21 (respectivement, 28) est le point de contact SIP du terminal 10 (respectivement, 11) dans le réseau IMS ; ainsi, toute la signalisation SIP échangée entre le terminal 10 (respectivement, 11) et le serveur d'appel I/S-CSCF 22 passe par ce serveur P-CSCF 21 (respectivement, 28) ;
- un ou plusieurs serveurs de base de données, de type HSS (pour "*Home Subscriber Server*") ; un serveur HSS, désigné par H sur la figure 1, contient le profil de l'utilisateur du terminal 10 en termes de données d'authentification, de localisation et de services souscrits ;
- optionnellement, un serveur de type SLF (pour "*Subscriber Location Fonction*") ; un serveur SLF, désigné par F sur la figure 1, est utilisé dans les réseaux IP comprenant plusieurs serveurs HSS ; plus précisément, ce serveur SLF F est interrogé par les fonctions I-CSCF et S-CSCF pour trouver l'adresse du serveur HSS H hébergeant les données concernant l'utilisateur du terminal 10 ; les serveurs HSS et le serveur SLF F communiquent entre eux au moyen du protocole "DIAMETER" (cf. document RFC 3588 de l'IETF), qui assure des fonctions d'authentification, d'autorisation et de comptabilité ;
- un (ou plusieurs) serveur(s) de messagerie vocale VM 25 ; le serveur VM 25 gère la souscription du terminal 10 aux événements de dépôt/consultation des messages de l'utilisateur de ce terminal, et notifie le terminal 10 lors de l'occurrence de ces événements ;
- un (ou plusieurs) serveur(s) de présence PS 26 ; le serveur PS 26 gère la souscription du terminal 10 aux événements de présence que l'utilisateur de ce terminal souhaite surveiller, et notifie le terminal lors de l'occurrence de ces événements ; et
- un (ou plusieurs) serveur(s) de téléphonie TAS 27 ; un serveur TAS gère les services téléphoniques auxquels l'utilisateur du terminal 10 a souscrits auprès de son opérateur, tels que la présentation du numéro ou le renvoi d'appel.

Les serveurs de messagerie vocale VM 25, les serveurs de présence PS 26 et les serveurs de téléphonie TAS 27 sont des exemples de ce que l'on appelle des "serveurs d'applications" ("*application servers*" ou AS en anglais).

Le serveur de base de données HSS H est notamment contacté :
- par la fonction I-CSCF lors de l'enregistrement du terminal 10 afin d'allouer un serveur S-CSCF à l'utilisateur de ce terminal ou de retrouver le serveur S-CSCF déjà alloué à cet utilisateur ;
- par la fonction S-CSCF lors de l'enregistrement initial du terminal 10 afin de télécharger les données concernant les services souscrits par cet utilisateur, dont notamment les points de détection qui permettront au serveur I/S-CSCF de déterminer quel message de signalisation il doit acheminer vers quel serveur d'application AS (comme par exemple le VM 25, le PS 26 ou le TAS 27) ;
- par la fonction S-CSCF lors des enregistrements de l'utilisateur du terminal 10, afin d'informer le serveur HSS H de l'installation ou de la prolongation d'un enregistrement de cet utilisateur sur le serveur I/S-CSCF;
- par la fonction S-CSCF, afin de récupérer les informations nécessaires à l'authentification de la signalisation émise par l'utilisateur du terminal 10 ;
- par la fonction I-CSCF lors de la réception d'un appel, afin de récupérer les coordonnées du serveur I/S-CSCF en charge de l'abonné destinataire de cet appel ; et
- par des serveurs d'application AS lors du dépôt ou de la récupération de données de services.

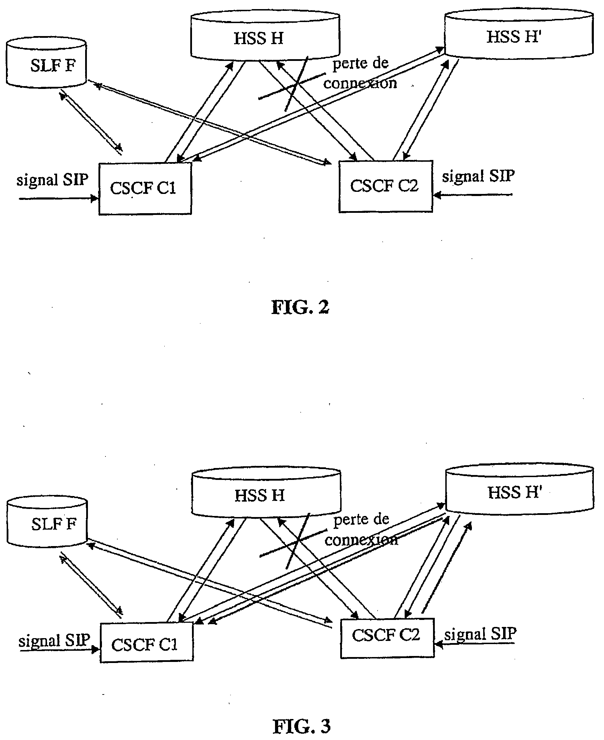

Le problème technique visé par la présente invention est illustré sur la **figure 2** dans le cadre d'une architecture de réseau donnée à titre d'exemple.

La figure 2 représente, schématiquement, deux serveurs CSCF C1 et C2 hébergeant chacun, indifféremment, une fonction S-CSCF, I-CSCF ou les deux. Ces serveurs CSCF C1 et C2 sont tous deux connectés à un serveur HSS primaire H, pour lequel il est prévu un serveur HSS de secours H'. Enfin, les serveurs CSCF C1 et C2 sont tous deux connectés à un serveur SLF F.

Si, par exemple, la connexion entre le serveur HSS H et le CSCF C2 tombe en panne, le CSCF C2 bascule sur le serveur HSS H'. Mais si la connexion entre le HSS H et le serveur CSCF C1 continue alors à fonctionner, ce dernier ne bascule pas sur le serveur HSS H'. Les données enregistrées subséquemment sur les serveurs H et H' vont donc devenir incohérentes, de sorte que le traitement des services rendus aux clients peut se dégrader fortement (appels entrants envoyés sur boîte vocale malgré la disponibilité du destinataire des appels, et ainsi de suite).

Le problème affectant les serveurs CSCF affecte évidemment les serveurs d'application AS de la même façon, et par conséquent tous les exemples ci-dessus et les modes de réalisation ci-dessous décrits, pour fixer les idées, en référence à des serveurs CSCF s'appliquent tout aussi bien aux serveurs AS.

On va maintenant illustrer le fonctionnement et les avantages de la présente invention au moyen de divers modes de réalisation.

La **figure 3** illustre un premier mode de réalisation du procédé selon l'invention. Les étapes de ce procédé sont essentiellement les suivantes.

A l'étape E1, le serveur CSCF C2 constate que H est injoignable.

A l'étape E2, le serveur C2 informe le serveur HSS de secours H' au moyen d'un message DIAMETER, de préférence autre que l'un de ceux servant à la supervision du lien DWR ("*Device-Watchdog-Request*"), que H est injoignable ; ce message DIAMETER peut être soit un nouveau message, soit un nouvel AVP ("*Attribute-Value Pair*") dans un message DIAMETER existant.

A l'étape E3, le serveur H' informe l'ensemble des serveurs CSCF qui lui sont raccordés (ici, C1) que le serveur H est injoignable, en diffusant un nouveau message DIAMETER (ou un message existant avec un nouvel AVP).

Enfin, à l'étape E4, sur réception de ce message, les CSCF (ici, C1) ayant le même HSS primaire H basculent sur le HSS de secours H'.

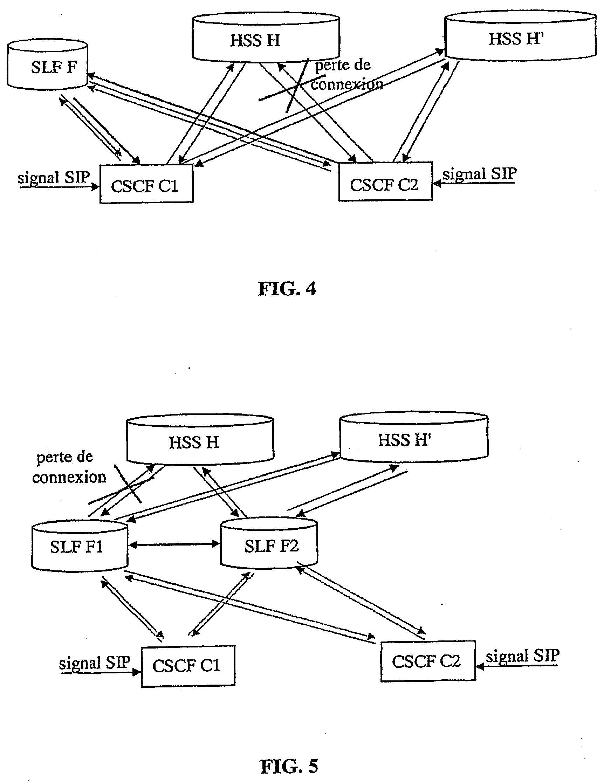

La **figure 4** illustre un deuxième mode de réalisation du procédé selon l'invention. Les étapes de ce procédé sont essentiellement les suivantes.

A l'étape E1, le serveur CSCF C2 constate que H est injoignable.

A l'étape E2, le serveur C2 informe le serveur SLF F au moyen d'un message DIAMETER, de préférence autre que l'un de ceux servant à la supervision du lien DWR, que H est injoignable ; ce message DIAMETER peut être soit un nouveau message, soit un nouvel AVP dans un message DIAMETER existant.

A l'étape E3, le serveur SLF F diffuse un nouveau message DIAMETER (ou un message existant avec un nouvel AVP), contenant l'information selon laquelle H est injoignable vers l'ensemble des CSCF. En variante, cette diffusion ne s'adresse qu'aux CSCF ayant exactement H en HSS primaire et H' en HSS de secours ; en effet, le serveur SLF ayant la connaissance des profils HSS primaire/HSS de secours, il lui est possible de faire une diffusion ciblée.

Enfin, à l'étape E4, sur réception de ce message, les CSCF (ici, C1) ayant le même HSS primaire H basculent sur le HSS de secours H'.

On va décrire à présent un troisième mode de réalisation (non représenté sur les figures) du procédé selon l'invention. Les étapes de ce procédé qui, pour la transmission de l'instruction de basculement, utilise le protocole SIP et les interfaces "Mw" (interfaces SIP entre tes serveurs I-CSCF, P-CSCF et S-CSCF), sont essentiellement les suivantes.

A l'étape E1, le serveur CSCF C2 constate que H est injoignable.

A l'étape E2, le serveur C2 informe tous les autres serveurs CSCF du réseau IMS qu'il vient de basculer sur un HSS de secours, en précisant la référence (H) du HSS primaire et (H') du HSS de secours ; cette information peut être diffusée soit dans une nouvelle requête spécifique, soit dans un nouveau header SIP à l'intérieur d'une requête existante, telle que "NOTIFY".

Enfin, à l'étape E3, sur réception de ce message, les CSCF (ici, C1) ayant le même HSS primaire H basculent sur le HSS de secours H'.

En variante, cette diffusion ne s'adresse qu'aux CSCF ayant exactement H comme HSS primaire, de manière à éviter une diffusion généralisée sur tous les autres serveurs CSCF du réseau IMS. Mais la mise en oeuvre de cette variante suppose toutefois que chaque serveur CSCF est configuré de manière à savoir quels autres serveurs CSCF ont le même serveur HSS primaire que lui ; or une telle solution est peu pratique car qu'elle implique des modifications de configuration fréquentes lors de réaménagements du réseau.

On notera que l'invention n'est pas nécessairement mise en oeuvre dans une architecture de réseau du type représenté sur les figures 2, 3 et 4. En effet, l'invention peut être mise en oeuvre dans d'autres structures, par exemple celle représentée sur la **figure 5****.**

Cette figure 5 correspond à une architecture de réseau dans laquelle plusieurs serveurs SLF (ici F1 et F2) fonctionnent en partage de charge, et assurent une fonction de mandataire ("*proxy server*") entre les serveurs CSCF et les serveurs HSS. Si l'on utilise une telle structure, il faut veiller à ce que les serveurs SLF partagent entre eux les informations relatives au basculement éventuel de l'un d'entre eux (ici, F1) sur le serveur HSS de secours H', de manière à ce que l'autre SLF (ici, F2) bascule alors lui aussi sur le serveur H'.

On va décrire à présent un quatrième mode de réalisation du procédé selon l'invention, adapté à l'architecture représentée sur la figure 5. Les étapes de ce procédé sont essentiellement les suivantes.

A l'étape E1, le serveur SLF F1 constate que H est injoignable.

A l'étape E2, le serveur F1 informe les autres serveurs SLF (ici, F2) du réseau IMS avec qui il est en partage de charge qu'il vient de basculer sur le HSS de secours H' ; cette information peut être diffusée dans un message DIAMETER, de préférence autre que l'un de ceux servant à la supervision du lien DWR ; ce message DIAMETER peut être soit un nouveau message, soit un nouvel AVP dans un message DIAMETER existant.

Enfin, à l'étape E3, sur réception de ce message, ces autres serveurs SLF (ici, F2) basculent du serveur HSS primaire H sur le HSS de secours H'.

On va décrire, enfin, un cinquième mode de réalisation du procédé selon l'invention, lui aussi adapté à l'architecture représentée sur la figure 5. Les étapes de ce procédé sont essentiellement les suivantes.

A l'étape E1, le serveur SLF F1 constate que H est injoignable.

A l'étape E2, le serveur F1 informe le serveur HSS de secours H' au moyen d'un message DIAMETER, de préférence autre que l'un de ceux servant à la supervision du lien DWR, que H est injoignable ; ce message DIAMETER peut être soit un nouveau message, soit un nouvel AVP dans un message DIAMETER existant.

A l'étape E3, le serveur H' informe l'ensemble des serveurs SLF qui lui sont raccordés (ici, F2) que le serveur H est injoignable, en diffusant un nouveau message DIAMETER (ou un message existant avec un nouvel AVP).

Enfin, à l'étape E4, sur réception de ce message, les serveurs SLF (ici, F2) ayant le même HSS primaire H basculent sur le HSS de secours H'.

La mise en oeuvre de l'invention au sein des noeuds du réseau de télécommunications (plus précisément, les serveurs de type HSS, CSCF, SLF et AS dans les modes de réalisation décrits ci-dessus) peut être réalisée au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre du procédé de basculement d'un HSS primaire sur un HSS de secours selon l'invention.

En effet, l'invention vise aussi un programme d'ordinateur téléchargeable depuis un réseau de communication comprenant des instructions pour l'exécution des étapes d'un procédé de basculement d'un HSS primaire sur un HSS de secours selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ("*floppy disc*" en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution du procédé de basculement d'un HSS primaire sur un HSS de secours selon l'invention.

## Revendications

1. Procédé de basculement d'un serveur HSS primaire sur un serveur HSS de secours dans un réseau IP, ledit réseau comprenant une pluralité de serveurs CSCF, respectivement, serveurs d'applications, (C1, C2), dans lequel, suite à la détection d'une perte de connexion entre l'un desdits serveurs CSCF, respectivement, serveurs d'applications, (C2) et un serveur HSS primaire (H) auquel il est normalement connecté, ce serveur CSCF, respectivement, serveur d'applications, (C2) se connecte à un serveur HSS de secours (H'), **caractérisé en ce qu'**il comprend également les étapes suivantes :
a) un dispositif de diffusion prédéterminé est informé de ladite perte de connexion avec ledit serveur HSS (H),
b) ledit dispositif de diffusion envoie, au moins aux autres serveurs CSCF, respectivement, serveurs d'applications, (C1) normalement connectés audit HSS primaire (H), un message de panne prédéterminé contenant la référence dudit serveur HSS primaire (H), et
c) lesdits autres serveurs CSCF, respectivement, serveurs d'applications, (C1) se connectent audit serveur HSS de secours (H').

2. Procédé de basculement selon la revendication 1, **caractérisé en ce que** ledit dispositif de diffusion comprend ledit serveur HSS de secours (H').

3. Procédé de basculement selon la revendication 1, **caractérisé en ce que** ledit dispositif de diffusion comprend un serveur SLF , *"Subscriber Location Function*", (F).

4. Procédé de basculement selon la revendication 1, **caractérisé en ce que** ledit dispositif de diffusion comprend ledit serveur CSCF , respectivement, serveur d'applications, (C2) ayant détecté une perte de connexion.

5. Procédé de basculement d'un serveur HSS primaire sur un serveur HSS de secours dans un réseau IP, ledit réseau comprenant une pluralité de serveurs CSCF, respectivement, serveurs d'apptications, (C1, C2) et une pluralité de serveurs SLF (F1, F2) assurant une fonction de mandataire entre lesdits serveurs CSCF, respectivement, serveurs d'applications, d'une part, et lesdits serveurs HSS primaire et de secours d'autre part, dans lequel, suite à la détection d'une perte de connexion entre l'un desdits serveurs SLF (F1) et un serveur HSS primaire (H) auquel il est normalement connecté, ce serveur SLF (F1) se connecte à un serveur HSS de secours (H'), **caractérisé en ce qu'**il comprend également les étapes suivantes :
a) un dispositif de diffusion prédéterminé est informé de ladite perte de connexion avec ledit serveur HSS (H),
b) ledit dispositif de diffusion envoie, au moins aux autres serveurs SLF (F2) normalement connectés audit HSS primaire (H), un message de panne prédéterminé contenant la référence dudit serveur HSS primaire (H), et
c) lesdits autres serveurs SLF (F2) se connectent audit serveur HSS de secours (H').

6. Procédé de basculement selon la revendication 5, **caractérisé en ce que** ledit dispositif de diffusion comprend ledit serveur HSS de secours (H').

7. Procédé de basculement selon la revendication 5, **caractérisé en ce que** ledit dispositif de diffusion comprend ledit serveur SLF (F1) ayant détecté une perte de connexion.

8. Dispositif de diffusion pour le basculement d'un serveur HSS primaire sur un serveur HSS de secours dans un réseau IP, ledit réseau comprenant une pluralité de serveurs CSCF, respectivement, serveurs d'applications (C1, C2), ledit dispositif comprenant des moyens pour, lors de la détection d'une perte de connexion entre l'un desdits serveurs CSCF, respectivement, serveurs d'applications, (C2) et un serveur HSS primaire (H) auquel il est normalement connecté, et de la connexion de ce serveur CSCF, respectivement, serveur d'applications, (C2) à un serveur HSS de secours (H') :
a) recevoir l'information de ladite perte de connexion avec ledit serveur HSS (H), et
b) envoyer, au moins aux autres serveurs CSCF, respectivement, serveurs d'applications, (C1) normalement connectés audit HSS primaire (H), un message de panne prédéterminé contenant la référence dudit serveur HSS primaire (H).

9. Dispositif de diffusion selon la revendication 8, **caractérisé en ce qu'**il comprend ledit serveur HSS de secours (H').

10. Dispositif de diffusion selon la revendication 8, **caractérisé en ce qu'**il comprend un serveur SLF (F).

11. Dispositif de diffusion selon la revendication 8, **caractérisé en ce qu'**il comprend ledit serveur CSCF, respectivement, serveur d'applications, (C2) ayant détecté une perte de connexion.

12. Dispositif de diffusion pour le basculement d'un serveur HSS primaire sur un serveur HSS de secours dans un réseau IP, ledit réseau comprenant une pluralité de serveurs CSCF, respectivement, serveurs d'applications, (C1, C2) et une pluralité de serveurs SLF (F1, F2) assurant une fonction de mandataire entre lesdits serveurs CSCF, respectivement, serveurs d'applications, d'une part, et lesdits serveurs HSS primaire et de secours d'autre part, ledit dispositif comprenant des moyens pour, lors de la détection d'une perte de connexion entre l'un desdits serveurs SLF (F1) et un serveur HSS primaire (H) auquel il est normalement connecté, et de la connexion de ce serveur SLF (F1) à un serveur HSS de secours (H') :
a) recevoir l'information de ladite perte de connexion avec ledit serveur HSS (H), et
b) envoyer, au moins aux autres serveurs SLF (F2) normalement connectés audit HSS primaire (H), un message de panne prédéterminé contenant la référence dudit serveur HSS primaire (H).

13. Dispositif de diffusion selon la revendication 12, **caractérisé en ce qu'**il comprend ledit serveur HSS de secours (H').

14. Dispositif de diffusion selon la revendication 12, **caractérisé en ce qu'**il comprend ledit serveur SLF (F1) ayant détecté une perte de connexion.

15. Moyen de stockage de données inamovible, ou partiellement ou totalement amovible, comportant des instructions de code de programme informatique pour l'exécution des étapes d'un procédé de basculement d'un HSS primaire sur un HSS de secours selon l'une quelconque des revendications 1 à 7.

16. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de basculement d'un HSS primaire sur un HSS de secours selon l'une quelconque des revendications 1 à 7, lorsqu'il est exécuté sur un ordinateur.

## Patentansprüche

1. Verfahren zum Umschalten von einem HSS-Primärserver auf einen HSS-Standby-Server in einem IP-Netzwerk, wobei das Netzwerk eine Vielzahl von CSCF-Servern, bzw. Anwendungsservern, (C1, C2) enthält, wobei nach der Erfassung eines Verbindungsverlusts zwischen einem der CSCF-Server, bzw. Anwendungsserver, (C2) und einem HSS-Primärserver (H), mit dem er normalerweise verbunden ist, dieser CSCF-Server, bzw. Anwendungsserver, (C2) sich mit einem HSS-Standby-Server (H') verbindet, **dadurch gekennzeichnet, dass** es ebenfalls die folgenden Schritte enthält:
a) eine vorbestimmte Verbreitungsvorrichtung wird über den Verbindungsverlust mit dem HSS-Server (H) informiert,
b) die Verbreitungsvorrichtung sendet zumindest an die anderen CSCF-Server, bzw. Anwendungsserver, (C1), die normalerweise mit dem Primär-HSS (H) verbunden sind, eine vorbestimmte Ausfallmitteilung, die die Referenz des HSS-Primärservers (H) enthält, und
c) die anderen CSCF-Server, bzw. Anwendungsserver, (C1) verbinden sich mit dem HSS-Standby-Server (H').

2. Umschaltverfahren nach Anspruch 1, **dadurch gekennzeichnet, dass** die Verbreitungsvorrichtung den HSS-Standby-Server (H') enthält.

3. Umschaltverfahren nach Anspruch 1, **dadurch gekennzeichnet, dass** die Verbreitungsvorrichtung einen SLF-Server, "Subscriber Location Function", (F) enthält.

4. Umschaltverfahren nach Anspruch 1, **dadurch gekennzeichnet, dass** die Verbreitungsvorrichtung den CSCF-Server, bzw. Anwendungsserver, (C2) enthält, der einen Verbindungsverlust erfasst hat.

5. Umschaltverfahren von einem HSS-Primärserver auf einen HSS-Standby-Server in einem IP-Netzwerk, wobei das Netzwerk eine Vielzahl von CSCF-Servern, bzw. Anwendungsservern, (C1, C2) und eine Vielzahl von SLF-Servern (F1, F2) enthält, die eine Proxy-Funktion zwischen den CSCF-Servern, bzw. Anwendungsservern, einerseits und den HSS-Primär- und Standby-Servern andererseits gewährleistet, wobei nach der Erfassung eines Verbindungsverlusts zwischen einem der SLF-Server (F1) und einem HSS-Primärserver (H), mit dem er normalerweise verbunden ist, dieser SLF-Server (F1) sich mit einem HSS-Standby-Server (H') verbindet, **dadurch gekennzeichnet, dass** es ebenfalls die folgenden Schritte enthält:
a) eine vorbestimmte Verbreitungsvorrichtung wird über den Verbindungsverlust mit dem HSS-Server (H) informiert,
b) die Verbreitungsvorrichtung sendet zumindest an die anderen SLF-Server (F2), die normalerweise mit dem Primär-HSS (H) verbunden sind, eine vorbestimmte Ausfallmitteilung, die die Referenz des HSS-Primärservers (H) enthält, und
c) die anderen SLF-Server (F2) verbinden sich mit dem HSS-Standby-Server (H').

6. Umschaltverfahren nach Anspruch 5, **dadurch gekennzeichnet, dass** die Verbreitungsvorrichtung den HSS-Standby-Server (H') enthält.

7. Umschaltverfahren nach Anspruch 5, **dadurch gekennzeichnet, dass** die Verbreitungsvorrichtung den SLF-Server (F1) enthält, der einen Verbindungsverlust erfasst hat.

8. Verbreitungsvorrichtung zum Umschalten von einem HSS-Primärserver auf einen HSS-Standby-Server in einem IP-Netzwerk, wobei das Netzwerk eine Vielzahl von CSCF-Servern, bzw. Anwendungsservern, (C1, C2) enthält, wobei die Vorrichtung Einrichtungen enthält, um bei der Erfassung eines Verbindungsverlusts zwischen einem der CSCF-Server, bzw. Anwendungsserver, (C2) und einem HSS-Primärserver (H), mit dem er normalerweise verbunden ist, und der Verbindung dieses CSCF-Servers, bzw. Anwendungsservers, (C2) mit einem HSS-Standby-Server (H'):
a) die Information über den Verbindungsverlust mit dem HSS-Server (H) zu empfangen, und
b) an mindestens die anderen CSCF-Server, bzw. Anwendungsserver, (C1), die normalerweise mit dem Primär-HSS (H) verbunden sind, eine vorbestimmte Ausfallmitteilung zu senden, die die Referenz des HSS-Primärservers (H) enthält.

9. Verbreitungsvorrichtung nach Anspruch 8, **dadurch gekennzeichnet, dass** sie den HSS-Standby-Server (H') enthält.

10. Verbreitungsvorrichtung nach Anspruch 8, **dadurch gekennzeichnet, dass** sie einen SLF-Server (F) enthält.

11. Verbreitungsvorrichtung nach Anspruch 8, **dadurch gekennzeichnet, dass** sie den CSCF-Server, bzw. Anwendungsserver, (C2) enthält, der einen Verbindungsverlust erfasst hat.

12. Verbreitungsvorrichtung zum Umschalten von einem HSS-Primärserver auf einen HSS-Standby-Server in einem IP-Netzwerk, wobei das Netzwerk eine Vielzahl von CSCF-Servern, bzw. Anwendungsservern, (C1, C2) und eine Vielzahl von SLF-Servern (F1, F2) enthält, die eine Proxy-Funktion zwischen den CSCF-Servern, bzw. Anwendungsservern, einerseits und den HSS-Primär- und Standby-Servern andererseits gewährleisten, wobei die Vorrichtung Einrichtungen enthält, um bei der Erfassung eines Verbindungsverlusts zwischen einem der SLF-Server (F1) und einem HSS-Primärserver (H), mit dem er normalerweise verbunden ist, und der Verbindung dieses SLF-Servers (F1) mit einem HSS-Standby-Server (H'):
a) die Information über den Verbindungsverlust mit dem HSS-Server (H) zu empfangen, und
b) mindestens an die anderen SLF-Server (F2), die normalerweise mit dem Primär-HSS (H) verbunden sind, eine vorbestimmte Ausfallmitteilung zu senden, die die Referenz des HSS-Primärservers (H) enthält.

13. Verbreitungsvorrichtung nach Anspruch 12, **dadurch gekennzeichnet, dass** sie den HSS-Standby-Server (H') enthält.

14. Verbreitungsvorrichtung nach Anspruch 12, **dadurch gekennzeichnet, dass** sie den SLF-Server (F1) enthält, der einen Verbindungsverlust erfasst hat.

15. Nicht entfernbare oder teilweise oder ganz entfernbare Datenspeichereinrichtung, die EDV-Programmcodeanweisungen für die Ausführung der Schritte eines Umschaltverfahrens von einem Primär-HSS auf einen Standby-HSS nach einem der Ansprüche 1 bis 7 aufweist.

16. Computerprogramm, das von einem Kommunikationsnetzwerk herunterladbar und/oder auf einem computerlesbaren Träger gespeichert und/oder von einem Mikroprozessor ausführbar ist, **dadurch gekennzeichnet, dass** es Anweisungen zur Ausführung der Schritte eines Umschaltverfahrens von einem Primär-HSS auf einen Standby-HSS nach einem der Ansprüche 1 bis 7 enthält, wenn es auf einem Computer ausgeführt wird.

## Claims

1. Method for toggling from a primary HSS server to a backup HSS server in an IP network, said network comprising a plurality of CSCF servers, respectively, application servers, (C1, C2), in which, subsequent to the detection of a loss of connection between one of said CSCF servers, respectively, application servers, (C2) and a primary HSS server (H) to which it is normally connected, this CSCF server, respectively, application server, (C2) connects to a backup HSS server (H'), **characterized in that** it also comprises the following steps:
a) a predetermined broadcasting device is informed of said loss of connection with said HSS server (H),
b) said broadcasting device dispatches, at least to the other CSCF servers, respectively, application servers, (C1) normally connected to said primary HSS (H), a predetermined fault message containing the reference of said primary HSS server (H), and
c) said other CSCF servers, respectively, application servers, (C1) connect to said backup HSS server (H').

2. Toggling method according to Claim 1, **characterized in that** said broadcasting device comprises said backup HSS server (H').

3. Toggling method according to Claim 1, **characterized in that** said broadcasting device comprises an SLF, "Subscriber Location Function", server (F).

4. Toggling method according to Claim 1, **characterized in that** said broadcasting device comprises said CSCF server, respectively, application server, (C2) that detected a loss of connection.

5. Method for toggling from a primary HSS server to a backup HSS server in an IP network, said network comprising a plurality of CSCF servers, respectively, application servers, (C1, C2) and a plurality of SLF servers (F1, F2) ensuring a function of proxy between said CSCF servers, respectively, application servers, on the one hand, and said primary and backup HSS servers on the other hand, in which, subsequent to the detection of a loss of connection between one of said SLF servers (F1) and a primary HSS server (H) to which it is normally connected, this SLF server (F1) connects to a backup HSS server (H'), **characterized in that** it also comprises the following steps:
a) a predetermined broadcasting device is informed of said loss of connection with said HSS server (H),
b) said broadcasting device dispatches, at least to the other SLF servers (F2) normally connected to said primary HSS (H), a predetermined fault message containing the reference of said primary HSS server (H), and
c) said other SLF servers (F2) connect to said backup HSS server (H').

6. Toggling method according to Claim 5, **characterized in that** said broadcasting device comprises said backup HSS server (H').

7. Toggling method according to Claim 5, **characterized in that** said broadcasting device comprises said SLF server (F1) that detected a loss of connection.

8. Broadcasting device for the toggling from a primary HSS server to a backup HSS server in an IP network, said network comprising a plurality of CSCF servers, respectively, application servers, (C1, C2), said device comprising means for, upon the detection of a loss of connection between one of said CSCF servers, respectively, application servers, (C2) and a primary HSS server (H) to which it is normally connected, and of the connection of this CSCF server, respectively, application server, (C2) to a backup HSS server (H'):
a) receiving the information regarding said loss of connection with said HSS server (H), and
b) dispatching, at least to the other CSCF servers, respectively, application servers, (C1) normally connected to said primary HSS (H), a predetermined fault message containing the reference of said primary HSS server (H).

9. Broadcasting device according to Claim 8, **characterized in that** it comprises said backup HSS server (H').

10. Broadcasting device according to Claim 8, **characterized in that** it comprises an SLF server (F).

11. Broadcasting device according to Claim 8, **characterized in that** it comprises said CSCF server, respectively, application server, (C2) that detected a loss of connection.

12. Broadcasting device for the toggling from a primary HSS server to a backup HSS server in an IP network, said network comprising a plurality of CSCF servers, respectively, application servers, (C1, C2) and a plurality of SLF servers (F1, F2) ensuring a function of proxy between said CSCF servers, respectively, application servers, on the one hand, and said primary and backup HSS servers on the other hand, said device comprising means for, upon the detection of a loss of connection between one of said SLF servers (F1) and a primary HSS server (H) to which it is normally connected, and of the connection of this SLF server (F1) to a backup HSS server (H'):
a) receiving the information regarding said loss of connection with said HSS server (H), and
b) dispatching, at least to the other SLF servers (F2) normally connected to said primary HSS (H), a predetermined fault message containing the reference of said primary HSS server (H).

13. Broadcasting device according to Claim 12, **characterized in that** it comprises said backup HSS server (H').

14. Broadcasting device according to Claim 12, **characterized in that** it comprises said SLF server (F1) that detected a loss of connection.

15. Irremovable, or partially or totally removable, means for storing data, comprising computational program code instructions for the execution of the steps of a method for toggling from a primary HSS to a backup HSS according to any one of Claims 1 to 7.

16. Computer program downloadable from a communication network and/or stored on a support readable by computer and/or executable by a microprocessor, **characterized in that** it comprises instructions for the execution of the steps of a method for toggling from a primary HSS to a backup HSS according to any one of Claims 1 to 7, when it is executed on a computer.
